# FASCICULE DE BREVET EUROPEEN

(11) **EP 2 079 596 B1**
(45) Date de publication et mention de la délivrance du brevet: **07.04.2010**
(21) Numéro de dépôt: 07820989.7
(22) Date de dépôt: 05.10.2007
(51) Int. Cl.: B60C 9/18

(54) **PNEUMATIQUE POUR ENGIN LOURD**
REIFEN FÜR SCHWER-NUTZFAHRZEUG
HEAVY GOODS VEHICLE TYRE

(30) Priorité: 18.10.2006 FR 0609342
(43) Date de publication de la demande: 22.07.2009
(73) Titulaire: Société de Technologie Michelin, 63000 Clermont-Ferrand (FR); Michelin Recherche et Technique S.A., 1763 Granges-Paccot (CH)
(72) Inventeur: BONDU, Lucien, 63800 La Roche Noire (FR)
(74) Mandataire: Le Cam, Stéphane Georges Elie
(86) Numéro de dépôt international: PCT/EP2007/060616
(87) Numéro de publication internationale: WO 2008/046749

(56) Documents cités:
- EP-A- 1 439 204
- FR-A1- 2 222 232
- FR-A1- 2 499 912
- FR-A1- 2 754 769
- FR-A1- 2 774 333

## Description

La présente invention concerne un pneumatique à armature de carcasse radiale et plus particulièrement un pneumatique destiné à équiper des véhicules portant de lourdes charges, tel qu'un véhicule de transport, par exemples les camions, tracteurs, remorques ou bus routiers, ou un engin de « Génie Civil ».

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

Les armatures de sommet de pneumatiques radiaux, et plus particulièrement en ce qui concerne les pneumatiques de très grandes dimensions, sont soumises à de grandes déformations, qui engendrent entre les bords de deux nappes des contraintes de cisaillement longitudinal et transversal (le cisaillement longitudinal est plus important que le transversal lorsque les câbles de nappes croisées font avec la direction circonférentielle des angles faibles), en même temps qu'une contrainte de délamination, contrainte radiale ayant tendance à séparer radialement les bords des deux nappes. Lesdites contraintes sont dues en premier lieu à la pression de gonflage du pneumatique, qui fait en sorte que la pression dite de ceinturage entre armature de carcasse et armature de sommet tend à provoquer l'expansion circonférentielle de ladite armature de sommet ; Lesdites contraintes sont en outre dues à la charge portée par le pneumatique en roulage avec naissance d'une surface de contact entre sol et pneumatique ; Lesdites contraintes sont encore dues à la mise en dérive du pneumatique en roulage. Ces contraintes génèrent des fissures dans le mélange caoutchouteux avoisinant l'extrémité de la nappe la plus courte, fissures qui se propagent dans ledit mélange et qui pénalisent l'endurance d'une armature de sommet, et donc du pneumatique.

Une amélioration nette de l'endurance a été procurée par l'emploi dans l'armature de sommet d'au moins une nappe de sommet de protection ayant une largeur axiale supérieure à la largeur de la nappe de travail la plus large axialement.

Dans le cas de pneumatique pour véhicules "Poids-Lourds", une seule nappe de protection est habituellement présente et ses éléments de protection sont, dans la plupart des cas, orientés dans la même direction et avec le même angle en valeur absolue que ceux des éléments de renforcement de la nappe de travail radialement la plus à l'extérieur et donc radialement adjacente. Dans le cas de pneumatiques de Génie Civil destinés aux roulages sur sols plus ou moins accidentés, la présence de deux nappes de protection est avantageuse, les éléments de renforcement étant croisés d'une nappe à la suivante.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneumatique et qui divise le pneumatique en deux moitiés.

Dans certaines conditions de roulage, les contraintes subsistent au niveau de l'armature de sommet et plus particulièrement les contraintes de cisaillement entre les nappes de sommet, et alliées à une élévation non négligeable de la température de fonctionnement au niveau des extrémités des nappes de sommet axialement les plus étroites, ont pour conséquence l'apparition et la propagation de fissures de la gomme au niveau desdites extrémités, et ceci malgré la présence à la jonction des bords de nappes de sommet de travail d'une couche de caoutchouc épaissie.

Afin de remédier aux inconvénients ci-dessus et d'améliorer l'endurance de l'armature de sommet du type de pneumatique étudié, un certain nombre de brevets antérieurs revendique des solutions relatives à la structure et qualité des couches et/ou profilés de mélanges caoutchouteux qui sont disposés entre et/ou autour des extrémités de nappes et plus particulièrement des extrémités de la nappe axialement la plus courte.

Le brevet FR-A-1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR-A-2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Le brevet US-A-5 154 217 utilise une unité de mesure différente et revendique de disposer entre les extrémités de deux nappes, dans le prolongement de la nappe comprise entre lesdites deux nappes, un coussin de mélange caoutchouteux dont le module d'élasticité à 100 % d'allongement est supérieur au module du même nom de la bande de roulement.

Pour assurer la jonction des deux bords respectifs de deux nappes d'armature de sommet, le brevet FR-A-2 298 448 décrit l'utilisation de gommes dites de cisaillement, entre les dits bords, de dureté Shore A et de module d'élasticité à 100 % élevés, utilisation combinée à l'emploi de bandes de caoutchouc anisotrope disposées entre les bords de l'armature de sommet et l'armature de carcasse.

Il en est de même dans le cas de la jonction des nappes d'armature de sommet décrites dans le brevet FR-A-2 499 912, la partie latérale de la couche de caoutchouc disposée entre les deux nappes principales de l'armature de sommet étant constituée d'un mélange caoutchouteux de dureté Shore élevée.

Dans le brevet EP-A-1 062 106, la demanderesse a proposé un pneumatique dont l'armature de sommet comprend au moins deux nappes d'éléments de renforcement, dans lequel le bord de la nappe axialement la moins large est séparé de la nappe axialement la plus large par un profilé de mélange caoutchouteux, dont l'extrémité axialement extérieure est située à une distance du plan équatorial du pneumatique au moins égale à la distance séparant dudit plan l'extrémité de la nappe la plus large et ledit profilé étant lui-même séparé du calandrage de la nappe la moins large par une gomme de bordure, ledit profilé, ladite gomme de bordure et ledit calandrage ayant respectivement des modules sécants d'élasticité sous tension à 10 % d'allongement relatif tels qu'ils décroissent radialement vers l'intérieur de puis le calandrage jusqu'au profilé.

Il a été constaté que les différentes structures énumérées ci-dessus ne procuraient pas une solution totalement satisfaisante dans des conditions de roulage fortement pénalisantes pour le pneumatique.

Une autre solution telle que décrite dans le brevet FR-A-2 421 742 consiste à répartir plus favorablement les contraintes génératrices de séparation entre nappes de sommet de travail, consécutives à la mise en dérive du pneumatique, en multipliant le nombre de nappes de travail.

La multiplication des nappes de travail n'est pas sans inconvénient, notamment au centre de l'armature de sommet où le nombre de nappes influe directement sur la rigidité de flexion du sommet du pneumatique. Lorsque cette rigidité augmente, il s'ensuit que des chocs intervenant sur le sommet du pneumatique, tels que notamment le passage sur des cailloux de grandes dimensions, peuvent conduire à un endommagement irrémédiable du pneumatique, du fait de cette rigidité accrue.

La demande de brevet WO-A-00/54992 a encore proposé pour éviter cet inconvénient de réaliser une armature de sommet de travail constituée d'au moins trois nappes de travail continues et d'au moins une demi-nappe, de chaque côté du plan médian circonférentiel, disposée entre les bords d'au moins deux nappes de travail continues radialement adjacentes et dont la particularité est notamment de présenter un angle avec la direction circonférentielle supérieur à 25° et supérieur d'une quantité comprise entre 5° et 15° au plus grand des angles des nappes de travail continues. Les résultats obtenus avec ce type d'architecture ont été tout à fait satisfaisants pour les dimensions de pneumatiques testées.

Les essais réalisés avec ce type de pneumatiques montrent qu'au vu des exigences actuelles en ce qui concerne les applications considérées, il peut encore être nécessaire d'améliorer les performances des pneumatiques notamment en terme d'endurance.

Les inventeurs se sont ainsi donné pour mission la réalisation de pneumatiques destinés à équiper des véhicules portant de lourdes charges présentant une endurance améliorée par rapport aux pneumatiques connus et permettant notamment de limiter l'apparition et la propagation de fissures dans les masses caoutchouteuses, à proximité des extrémités des nappes de sommet, quelles que soient les conditions de roulage.

Ce but a été atteint selon l'invention par un pneumatique à armature de carcasse radiale, surmontée d'une armature de sommet comprenant au moins trois nappes d'éléments de renforcement, parallèles entre eux dans chaque nappe, au moins l'extrémité axialement extérieure d'une première nappe étant radialement en regard d'une deuxième nappe située radialement plus à l'intérieur et radialement en regard d'une troisième nappe située radialement plus à l'extérieur, au moins un premier profilé P1 de mélange caoutchouteux séparant radialement ladite deuxième nappe d'au moins l'extrémité de ladite première nappe, l'extrémité axialement extérieure dudit premier profilé P1 étant située à une distance du plan équatorial du pneumatique inférieure à la distance séparant dudit plan l'extrémité de ladite deuxième nappe, ledit profilé P1 étant radialement séparé du calandrage, radialement extérieur, C1 de ladite première nappe par un deuxième profilé de mélange caoutchouteux G1, au moins un troisième profilé P2 de mélange caoutchouteux séparant radialement ladite troisième nappe d'au moins l'extrémité de la dite première nappe, l'extrémité axialement extérieure dudit troisième profilé P2 étant située à une distance du plan équatorial du pneumatique inférieure à la distance séparant dudit plan l'extrémité de ladite troisième nappe, ledit profilé P2 étant radialement séparé du calandrage, radialement intérieur, C2 de ladite première nappe par un quatrième profilé de mélange caoutchouteux G2, et lesdits profilés de mélange caoutchouteux P1, P2 et G1, G2 et lesdits calandrages C1, C2 ayant respectivement des modules sécants d'élasticité sous tension à 10 % d'allongement MP1, MP2, MG1, MG2, MC1, MC2 de sorte que MC1 ≥ MG1 > MP1 et MC2 ≥ MG2 > MP2.

La combinaison des différentes couches de mélanges caoutchouteux P1, P2 et G1, G2 de par le choix de leurs modules d'élasticité respectifs MP1, MP2 et MG1, MG2 autorise une amélioration de la résistance de l'architecture sommet à la séparation entre les extrémités des nappes de travail. La présence de ces couches de mélange caoutchouteux semble en effet permettre, du fait du découplage des nappes ainsi obtenu, de protéger l'extrémité de la première nappe et ainsi prévenir ou tout au moins retarder l'apparition et/ou la propagation de fissuration dans les masses caoutchouteuses.

L'empilement de part et d'autre de ladite extrémité de deux profilés de mélanges caoutchouteux créant de part et d'autre des gradients de modules d'élasticité décroissants depuis les calandrages de ladite extrémité jusqu'à chacune des nappes radialement en regard de ladite extrémité semble effectivement permettre au pneumatique de mieux supporter les contraintes auxquelles il peut être soumis et ainsi améliorer ses performances en termes d'endurance dans des conditions de roulage particulièrement sévères.

Selon un mode de réalisation particulièrement avantageux de l'invention, les épaisseurs E_{P1} et E_{G1} et E_{P2} et E_{G2} des profilés de mélanges caoutchouteux P1 et G1 et P2 et G2, mesurées selon la direction radiale, sont telles que, E_{P1} est compris entre 30 et 60% de (E_{G1} + E_{P1}) et E_{P2} est compris entre 30 et 60% de (E_{G2} + E_{P2}). En dessous de 30%, les résultats ne montrent pas d'effet notable et au-delà de 60%, il s'avère que dans des utilisations particulières des pneumatiques, l'amélioration de la résistance à la séparation entre nappes s'atténue.

De préférence, les sommes des épaisseurs respectives des profilés de mélange caoutchouteux P1 et G 1 et P2 et G2, mesurées à l'extrémité de la première nappe selon la direction radiale, sont respectivement comprises entre 30 % et 80 % de l'épaisseur globale de mélange caoutchouteux entre génératrices de câbles respectivement des première et deuxième nappes, et troisième et première nappes : une épaisseur inférieure à 30 % ne permet pas d'obtenir des résultats probants, et une épaisseur supérieure à 80 % est inutile vis à vis de l'amélioration à la résistance à la séparation entre nappes et désavantageux du point de vue coût.

Les essais réalisés avec des pneumatiques selon l'invention ont montré que malgré des conditions de roulage extrêmes en termes de charges transportées, de la nature du sol et des parcours suivis, lesdits pneumatiques conservent leur intégrité alors que des pneumatiques usuels présentent des dégradations avancées pour ces mêmes conditions de roulage.

Selon une variante de réalisation de l'invention, l'armature de sommet comprend au moins deux nappes de travail recouvertes radialement d'au moins une nappe de protection, la largeur axiale de la nappe de travail radialement la plus à l'extérieur étant inférieure à la largeur desdites deux autres nappes. Conformément à cette variante de réalisation de l'invention, la nappe de sommet axialement la plus étroite est positionnée radialement entre la première nappe de travail, elle-même adjacente à l'armature de carcasse, et la nappe de protection. D'une part, l'extrémité de ladite nappe de travail axialement la plus étroite est radialement en regard de la nappe de sommet de travail radialement la plus à l'intérieur et séparée de celle-ci par un premier profilé P1 de mélange caoutchouteux, lui-même étant radialement séparé du calandrage, radialement extérieur, C1 de ladite nappe de travail axialement la plus étroite par un deuxième profilé de mélange caoutchouteux G1, tel que lesdits profilés de mélange caoutchouteux P1 et G1 et ledit calandrage C1 ont respectivement des modules sécants d'élasticité sous tension à 10 % d'allongement MP1, MG1, MC1, de sorte que MC1 ≥ MG1 1 > MP1. D'autre part, l'extrémité de ladite nappe de travail axialement la plus étroite est radialement en regard de la nappe de protection et séparée de celle-ci par un troisième profilé P2 de mélange caoutchouteux, lui-même étant radialement séparé du calandrage, radialement intérieur, C2 de ladite nappe de travail axialement la plus étroite par un quatrième profilé de mélange caoutchouteux G2, tel que lesdits profilés de mélange caoutchouteux P2 et G2 et ledit calandrage C2 ont respectivement des modules sécants d'élasticité sous tension à 10 % d'allongement MP2, MG2, MC2, de sorte que MC2 ≥ MG2 > MP2.

Selon d'autres variantes de réalisations de pneumatiques selon l'invention, notamment dans le cas de pneumatiques destinés à des véhicules de type Dumper pour des applications génie civil, l'armature de sommet comprend au moins deux nappes de travail continues et elle est complétée de chaque côté du plan médian circonférentiel par au moins une demi-nappe de travail. Selon ce type de variante de réalisation, l'extrémité de nappe considérée selon l'invention peut être celle d'une nappe continue, ou celle d'une demi-nappe, selon les cas de réalisation ; en effet, l'extrémité de nappe radialement en regard de deux nappes radialement réparties de chaque côté de ladite extrémité peut être celle d'une nappe continue ou d'une demi-nappe.

Selon un mode de réalisation préféré de l'invention, l'armature de sommet comprenant au moins quatre nappes, outre ladite première nappe, l'extrémité axialement extérieure d'au moins une autre nappe radialement en regard d'au moins une nappe située radialement plus à l'extérieur ou radialement plus à l'intérieur est séparée radialement de cette dernière nappe par un profilé Px de mélange caoutchouteux, ledit profilé Px étant radialement séparé du calandrage radialement extérieur Cx de ladite autre nappe par un deuxième profilé de mélange caoutchouteux Gx et lesdits profilés de mélange caoutchouteux Px, Gx et ledit calandrage Cx ayant respectivement des modules sécants d'élasticité sous tension à 10 % d'allongement MPx, MGx, MCx de sorte que MCx ≥ MGx > MPx.

De préférence selon l'invention; l'extrémité axialement extérieure dudit profilé Px est située à une distance du plan équatorial du pneumatique inférieure à la distance séparant dudit plan l'extrémité de ladite dernière nappe.

Selon ce mode de réalisation préféré de l'invention, en plus des empilements de deux profilés de mélanges caoutchouteux de part et d'autre de l'extrémité de la nappe radialement en regard de deux autres nappes, au moins une autre extrémité de nappe, axialement extérieure, en regard d'une nappe est séparée de celle-ci par un empilement de deux profilés de mélanges caoutchouteux créant un gradient de modules d'élasticité décroissants depuis le calandrage de ladite extrémité jusqu'à la nappe radialement en regard de ladite extrémité.

Chacune des extrémités axialement extérieures pouvant être sollicitée lors de conditions de roulage particulièrement sévères, il apparaît que cette réalisation de l'invention améliore encore les performances du pneumatique en termes d'endurance.

De préférence, selon ce dernier mode de réalisation de l'invention, les épaisseurs E_{Px} et E_{Gx} des profilés de mélanges caoutchouteux Px et Gx, mesurées selon la direction radiale, sont telles que, E_{Px} est compris entre 30 et 60% de (E_{Gx} + E_{Px}).

Une variante préférée de l'invention prévoit que l'extrémité de toute nappe de l'armature de sommet en regard d'une autre nappe située radialement plus à l'extérieur ou radialement plus à l'intérieur est séparée radialement de cette dernière nappe par un empilement de deux profilés de mélanges caoutchouteux créant un gradient de modules d'élasticité décroissants depuis le calandrages de ladite extrémité jusqu'à la nappe radialement en regard de ladite extrémité.

De préférence encore, l'invention prévoit que l'extrémité de toute nappe de l'armature de sommet en regard de deux autres nappes situées respectivement radialement plus à l'extérieur et radialement plus à l'intérieur est séparée radialement de ces deux nappes par des empilements de deux profilés de mélanges caoutchouteux créant chacun un gradient de modules d'élasticité décroissants depuis le calandrages de ladite extrémité jusqu'à chacune des nappes radialement en regard de ladite extrémité.

Selon une réalisation préférée de l'invention, les profilés de mélange caoutchouteux G1, G2, Gx ont leurs extrémités axialement intérieures situées à des distances du plan équatorial respectivement au plus égales aux distances séparant dudit plan les extrémités axialement intérieures des profilés de mélange caoutchouteux P1, P2, Px. Selon cette réalisation, les profilés de mélange caoutchouteux P1, P2, Px ne sont pas au contact des nappes dont les extrémités sont séparées respectivement par des empilements de profilés de mélange caoutchouteux d'autres nappes.

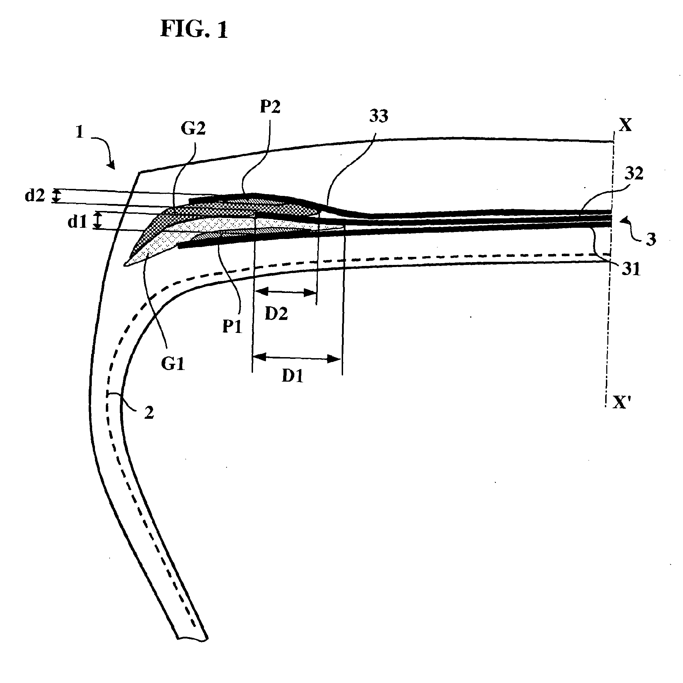

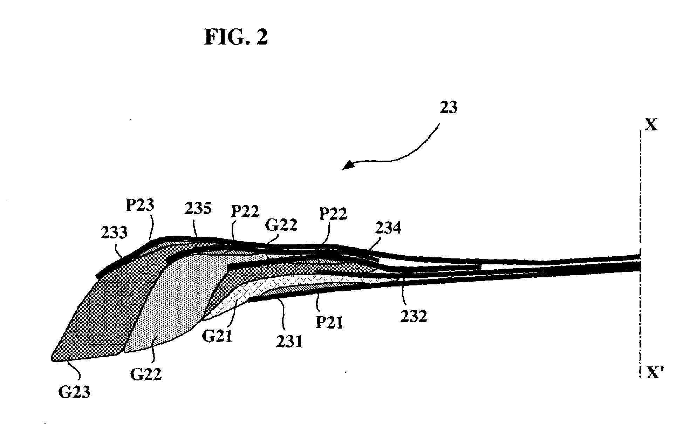

D'autres détails et caractéristiques avantageux de l'invention ressortiront ci-après de la description d'exemples de réalisations de l'invention en références aux figures 1 et 2 qui représentent :

Figure 1, une vue partielle en section méridienne d'un schéma d'un pneumatique selon une première réalisation de l'invention,

Figure 2, une vue partielle en section méridienne d'un schéma de l'armature de sommet d'un pneumatique selon une deuxième réalisation de l'invention,

Les figures ne sont pas représentées à l'échelle pour en faciliter la compréhension.

Les figures ne représentent qu'une demi-vue des pneumatiques qui se prolongent de manière symétrique par rapport à l'axe XX' qui représente le plan médian circonférentiel, ou plan équatorial, d'un pneumatique.

Sur la figure 1, est représentée une vue schématique partielle en section méridienne d'un pneumatique 1 de dimension 40.00R57.

Le pneumatique 1 comprend une armature de carcasse radiale 2 ancrée dans chaque bourrelet ; lesdits bourrelets ne sont pas représentés sur les figures. Elle est radialement à l'extérieur surmontée d'une armature de sommet 3 comprenant radialement de l'intérieur à l'extérieur :

- une première nappe de sommet de travail 31, formée de câbles métalliques inextensibles en acier faisant avec la direction circonférentielle un angle α1 égal à 18°,

- radialement à l'extérieur et au contact de la nappe de sommet de travail 31, une couche P1 de mélanges caoutchouteux,

- radialement à l'extérieur et au contact de la couche P1 de mélanges caoutchouteux, une couche G1 de mélange caoutchouteux,

- radialement à l'extérieur de la couche de mélange caoutchouteux G1, une deuxième nappe de sommet de travail 32 formée de câbles métalliques identiques à ceux de la première nappe 31, et faisant avec la direction circonférentielle un angle α2, opposé à l'angle α1 et, dans le cas montré, égal en valeur absolue audit angle α1 de 18°, (mais pouvant être différent dudit angle α1),

- radialement à l'extérieur de la nappe de travail 32, une couche G2 de mélange caoutchouteux,

- radialement à l'extérieur de la couche de mélange caoutchouteux G2, une couche P2 de mélanges caoutchouteux,

- radialement à l'extérieur de la couche de mélange caoutchouteux P2, une nappe de protection 33. La nappe de protection 33 est une nappe de câbles métalliques en acier orientés par rapport à la direction circonférentielle d'un angle α3 de même sens que l'angle α2. La largeur L3 de la nappe de protection 33 est supérieure à la largeur L2 de la nappe de travail 32 et inférieure à la largeur L1 de la nappe de travail 31.

Les calandrages C1 et C2, de part et d'autres des éléments de renforcement de la nappe de travail 32 sont constitués du même mélange caoutchouteux. Il est bien entendu que les calandrages pourraient être différents.

La combinaison des couches de mélange caoutchouteux P1 et G1 assure un découplage entre la nappe de travail 31 et l'extrémité de la nappe de travail 32 radialement extérieure.

La largeur axiale de la couche de mélange caoutchouteux P1 est choisie telle que son extrémité axialement extérieure est axialement intérieure à l'extrémité de la nappe 31.

Sur la figure 1, l'extrémité axialement extérieure de la couche de mélange caoutchouteux G1 est axialement extérieure et radialement intérieure à l'extrémité de la nappe de travail 31. Selon d'autres modes de réalisation de l'invention non représentés sur les figures, l'extrémité axialement extérieure de la couche de mélange caoutchouteux G1 peut être axialement comprise entre l'extrémité de la nappe de travail 31 et l'extrémité axialement extérieure de la couche de mélange caoutchouteux P1.

La zone d'engagement des profilés de mélange caoutchouteux P1 et G1 entre les deux nappes de travail 31 et 32 est définie par l'épaisseur ou plus précisément la distance radiale d1 entre l'extrémité de la nappe 32 et la nappe 31 et par la largeur axiale D1 du profilé de mélange caoutchouteux G1 comprise entre l'extrémité axialement intérieure dudit profilé de mélange caoutchouteux G1 et l'extrémité de la nappe de sommet de travail 32. La distance radiale d1 est égale à 9 mm. La distance axiale D1 est égale à 75 mm, soit environ 15 fois le diamètre φ2 des éléments de renforcement de la nappe de travail 32, le diamètre φ2 étant égal à 5 mm.

Les modules d'élasticité à 10% d'élongation des couches de mélange caoutchouteux P1 et G1 et de la couche de calandrage C1 de la nappe de travail 32, respectivement MP1 et MG1 et MC1, sont choisis tels qu'ils satisfassent la relation suivante: MP1 < MG1 ≤ MC1. Une telle réalisation du pneumatique 1 autorise une diminution des sollicitations de la couche de calandrage C1, en passant par la couche de mélange caoutchouteux G1 au contact de la nappe de travail 32 jusqu'à la couche de mélange caoutchouteux P1 au contact de la nappe de travail 31, ce qui permet d'améliorer la résistance de l'architecture sommet à la séparation entre les extrémités des nappes de travail 31 et 32.

La combinaison des couches de mélange caoutchouteux P2 et G2 assure un découplage entre l'extrémité de la nappe de travail 32 et la nappe de protection 33 radialement extérieure.

La largeur axiale de la couche P2 est choisie telle que son extrémité axialement extérieure est axialement intérieure à l'extrémité de la nappe de protection 33.

Sur la figure 1, l'extrémité axialement extérieure de la couche de mélange caoutchouteux G2 est axialement extérieure à l'extrémité de la nappe de protection 33. Selon d'autres modes de réalisation de l'invention non représentés sur les figures, l'extrémité axialement extérieure de la couche de mélange caoutchouteux G2 peut être axialement comprise entre l'extrémité de la nappe de protection 33 et l'extrémité axialement extérieure de la couche de mélange caoutchouteux P2.

La zone d'engagement des profilés de mélange caoutchouteux P2 et G2 entre les deux nappes de travail 32 et 33 est définie par l'épaisseur ou plus précisément la distance radiale d2 entre l'extrémité de la nappe 32 et la nappe 31 et par la largeur axiale D2 du profilé de mélange caoutchouteux G2 comprise entre l'extrémité axialement intérieure dudit profilé de mélange caoutchouteux G2 et l'extrémité de la nappe de sommet de travail 32. La distance radiale d2 est égale à 7 mm. La distance axiale D2 est égale à 85 mm, soit environ 17 fois le diamètre φ2 des éléments de renforcement de la nappe de travail 32, le diamètre φ2 étant égal à 5 mm.

Les modules d'élasticité à 10% d'élongation des couches de mélange caoutchouteux P2 et G2 et de la couche de calandrage C2 de la nappe de travail 32, respectivement MP2 et MG2 et MC2, sont choisis tels qu'ils satisfassent la relation suivante : MP2 < MG2 ≤ MC2. Une telle réalisation du pneumatique 1 autorise une diminution des sollicitations de la couche de calandrage C2, en passant par la couche de mélange caoutchouteux G2 au contact de la nappe de travail 32 jusqu'à la couche de mélange caoutchouteux P2 au contact de la nappe de protection 33, ce qui permet d'améliorer la résistance de l'architecture sommet à la séparation entre les extrémités des nappes 32 et 33.

La figure 2 représente une vue schématique en section méridienne de l'armature de sommet 23 d'un pneumatique, semblable à celle de la figure 1 et qui diffère de cette dernière par la présence de nappes de travail supplémentaires et notamment de nappes de travail interrompues en leur milieu et qui se traduisent par la présence de deux demi-nappes de travail d'épaules. L'armature de sommet 23 comporte ainsi deux paires de demi-nappes 234 et 235 radialement extérieures aux nappes de travail continues 231, 232 et radialement intérieures à la nappe de protection 233.

De manière similaire au cas de la figure 1, l'extrémité axialement extérieure de la nappe de travail 232 est radialement découplée de la nappe 231 par la combinaison des couches de mélange caoutchouteux P21 et G21.

Comme dans le cas de la figure 1, les modules d'élasticité à 10% d'élongation des couches de mélange caoutchouteux P21 et G21 et de la couche de calandrage C21 de la nappe de travail 232, respectivement MP21 et MG21 et MC21, sont choisis tels qu'ils satisfassent la relation suivante : MP2 < MG21 ≤ MC21.

L'extrémité axialement extérieure de la nappe de travail 232 est ensuite radialement découplée de la demi-nappe 234 par la combinaison des couches de mélanges P22 et G22.

Les modules d'élasticité à 10% d'élongation des couches de mélange caoutchouteux P22 et G22 et de la couche de calandrage C22 de la nappe de travail 232, respectivement MP22 et MG22 et MC2 sont choisis tels qu'ils satisfassent la relation suivante : MP22 < MG22 ≤ MC22.

L'extrémité axialement extérieure de la demi nappe 234 qui vient radialement en regard de la demi-nappe 235 est elle-même séparée de la demi-nappe 235 par la combinaison de couches de mélanges P23 et G23.

Les modules d'élasticité à 10% d'élongation des couches de mélange caoutchouteux P23 et G23 et de la couche de calandrage C23 de la demi-nappe de travail 234, respectivement MP23 et MG23 et MC23 sont choisis tels qu'ils satisfassent la relation suivante : MP23 < MG23 ≤ MC23.

L'extrémité axialement extérieure de la demi-nappe 235 qui vient radialement en regard de la nappe de protection 233 est elle-même séparée de ladite nappe de protection 233 par la combinaison de couches de mélanges P24 et G24.

Les modules d'élasticité à 10% d'élongation des couches de mélange caoutchouteux P24 et G24 et de la couche de calandrage C24 de la demi-nappe de travail 235, respectivement MP24 et MG24 et MC24 sont choisis tels qu'ils satisfassent la relation suivante : MP24 < MG24 ≤ MC24.

Les épaisseurs, largeurs axiales et zones d'engagement entre les nappes des différents mélanges caoutchouteux représentés sur la figure 2 sont semblables à ceux de la figure 1.

Conformément à l'invention, l'armature de sommet 23 représentée sur la figure 2 présente une nappe de travail 232 dont l'extrémité est de part et d'autre radialement en regard de deux nappes dont elle est découplée par des combinaisons de mélanges caoutchouteux. En outre, d'autres extrémités axialement extérieures d'autres nappes en regard radialement d'au moins une nappe sont radialement découplées de ladite au moins une nappe par une combinaison de mélanges caoutchouteux. Selon l'invention, ces différentes combinaisons de mélanges caoutchouteux satisfont les relations, précédemment décrites, liant leurs modules respectifs ainsi que celui du calandrage de la nappe dont l'extrémité est considérée.

Des essais de roulage ont été réalisés avec ces deux types de pneumatiques représentés sur les figures 1 et 2 et comparés avec des pneumatiques usuels présentant la même armature de sommet mais comportant un simple mélange caoutchouteux en lieu et place des combinaisons selon l'invention. Les conditions de roulage particulièrement sévères en termes de charges et de nature de sols ont été identiques pour tous les pneumatiques.

L'analyse des pneumatiques après une distance parcourue donnée a montré que les pneumatiques selon les figures 1 et 2 ne présentent aucune altération alors que les pneumatiques de conceptions usuelles présentent déjà des zones de fissuration aux extrémités de certaines nappes de travail.

Bien que certaines jonctions entre nappes soient moins pénalisées du point de vue séparation inter-nappes, il semble tout de même que des solutions telles que celles présentées sur la figure 2 qui prévoient des découplages par une combinaison de mélanges caoutchouteux à différentes extrémités de nappes et éventuellement radialement que d'un côté de certaines extrémités apporte une amélioration complémentaire en ce qui concerne les propriétés d'endurance du pneumatique dans des conditions de roulage très sévères.

Les exemples illustrés sur les figures ne doivent pas être interprétés de manière limitative. Des pneumatiques selon l'invention peuvent comporter un nombre plus important de nappes de travail, de nappes de protection ; ils peuvent encore comporter d'autres types de nappes telles que des nappes de frettage, ...

L'invention ne doit également pas être comprise comme étant limitée à la présence de combinaison de mélanges caoutchouteux, conformes à l'invention, à chacune des extrémités axialement extérieures d'une nappe radialement en regard d'une autre nappe ; en d'autres termes, un pneumatique selon l'invention peut comporter une ou plusieurs extrémités axialement extérieures radialement en regard d'une nappe sans être découplées de celle-ci.

## Revendications

1. Pneumatique à armature de carcasse radiale, surmontée d'une armature de sommet comprenant au moins trois nappes d'éléments de renforcement, parallèles entre eux dans chaque nappe, au moins l'extrémité axialement extérieure d'une première nappe étant radialement en regard d'une deuxième nappe située radialement plus à l'intérieur et radialement en regard d'une troisième nappe située radialement plus à l'extérieur, **caractérisé en ce qu'**au moins un premier profilé P1 de mélange caoutchouteux sépare radialement ladite deuxième nappe d'au moins l'extrémité de ladite première nappe, **en ce que** l'extrémité axialement extérieure dudit premier profilé P1 est située à une distance du plan équatorial du pneumatique inférieure à la distance séparant dudit plan l'extrémité de ladite deuxième nappe, **en ce que** ledit profilé P1 est radialement séparé du calandrage radialement extérieur C1 de ladite première nappe par un deuxième profilé de mélange caoutchouteux G1, **en ce qu'**au moins un troisième profilé P2 de mélange caoutchouteux sépare radialement ladite troisième nappe d'au moins l'extrémité de la dite première nappe, **en ce que** l'extrémité axialement extérieure dudit troisième profilé P2 est située à une distance du plan équatorial du pneumatique inférieure à la distance séparant dudit plan l'extrémité de ladite troisième nappe, **en ce que** ledit profilé P2 est radialement séparé du calandrage radialement intérieur C2 de ladite première nappe par un quatrième profilé de mélange caoutchouteux G2, et **en ce que** lesdits profilés de mélange caoutchouteux P1, P2 et G1, G2 et lesdits calandrages C1, C2 ont respectivement des modules sécants d'élasticité sous tension à 10 % d'allongement MP1, MP2, MG1, MG2, MC1, MC2 de sorte que MC1 ≥ MG1 > MP1 et MC2 ≥ MG2 > MP2.

2. Pneumatique selon la revendication 1, **caractérisé en ce que** les épaisseurs E_{P1} et E_{G1} et E_{P2} et E_{G2} des profilés de mélanges caoutchouteux P1 et G 1 et P2 et G2, mesurées selon la direction radiale sont telles que, E_{P1} est compris entre 30 et 60% de (E_{G1} + E_{P1}) et E_{P2} est compris entre 30 et 60% de (E_{G2} + E_{P2})_{.}

3. Pneumatique selon la revendication 1 ou 2, **caractérisé en ce que** les sommes des épaisseurs respectives des profilés de mélange caoutchouteux P1 et G 1 et P2 et G2, mesurées à l'extrémité de la première nappe selon la direction radiale, sont respectivement comprises entre 30 % et 80 % de l'épaisseur globale de mélange caoutchouteux entre génératrices de câbles respectivement des première et deuxième nappes et troisième et première nappes.

4. Pneumatique selon l'une des revendications 1 à 3, **caractérisé en ce que** l'armature de sommet comprend au moins deux nappes de travail recouvertes radialement d'au moins une nappe de protection et **en ce que** la largeur axiale de la nappe de travail radialement la plus à l'extérieur est inférieure à la largeur desdites deux autres nappes.

5. Pneumatique selon l'une des revendications 1 à 4, **caractérisé en ce que** l'armature de sommet comprend au moins deux nappes de travail continues et **en ce qu'**elle est complétée de chaque côté du plan médian circonférentiel par au moins une demi-nappe de travail.

6. Pneumatique selon l'une des revendications 1 à 5, l'armature de sommet comprenant au moins quatre nappes, **caractérisée en ce que**, outre ladite première nappe, l'extrémité axialement extérieure d'au moins une autre nappe radialement en regard d'au moins une nappe située radialement plus à l'extérieur ou radialement plus à l'intérieur est séparée radialement de cette dernière nappe par un profilé Px de mélange caoutchouteux, **en ce que** ledit profilé Px est radialement séparé du calandrage radialement extérieur Cx de ladite autre nappe par un deuxième profilé de mélange caoutchouteux Gx et **en ce que** lesdits profilés de mélange caoutchouteux Px, Gx et ledit calandrage Cx ont respectivement des modules sécants d'élasticité sous tension à 10 % d'allongement MPx, MGx, MCx de sorte que MCx ≥ MGx > MPx.

7. Pneumatique selon la revendication 6, **caractérisé en ce que** l'extrémité axialement extérieure dudit profilé Px est située à une distance du plan équatorial du pneumatique inférieure à la distance séparant dudit plan l'extrémité de ladite dernière nappe.

8. Pneumatique selon la revendication 6 ou 7, **caractérisé en ce que** les épaisseurs E_{Px} et E_{Gx} des profilés de mélanges caoutchouteux Px et Gx, mesurées selon la direction radiale sont telles que, E_{Px} est compris entre 30 et 60% de (E_{Gx} + E_{Px}).

9. Pneumatique selon l'une des revendications précédentes, **caractérisée en ce que** les profilés de mélange caoutchouteux G1, G2, Gx ont leurs extrémités axialement intérieures situées à des distances du plan équatorial respectivement au plus égales aux distances séparant dudit plan les extrémités axialement intérieures des profilés de mélange caoutchouteux P1, P2, Px.

## Claims

1. Tire with a radial carcass reinforcement surmounted by a crown reinforcement comprising at least three plies of reinforcing elements which are parallel to one another in each ply, at least the axially outer end of a first ply being radially opposite a second ply situated radially more inwardly, and radially opposite a third ply situated radially more outwardly, **characterized in that** at least a first profiled rubber compound element P1 radially separates the said second ply from at least the end of the said first ply, **in that** the axially outer end of the said first profiled element P1 is situated at a distance from the equatorial plane of the tire which is less than the distance separating the said plane from the end of the said second ply, **in that** the said profiled element P1 is radially separated from the radially outer liner C1 of the said first ply by a second profiled rubber compound element G1, **in that** at least a third profiled rubber compound element P2 radially separates the said third ply from at least the end of the said first ply, **in that** the axially outer end of the said third profiled element P2 is situated at a distance from the equatorial plane of the tire which is less than the distance separating the said plane from the end of the said third ply, **in that** the said profiled element P2 is radially separated from the radially inner liner C2 of the said first ply by a fourth profiled rubber compound element G2, and **in that** the said profiled rubber compound elements P1, P2 and G1, G2 and the said liners C1, C2 have respective tensile secant moduli of elasticity at 10% elongation MP1, MP2, MG1, MG2, MC 1, MC2 such that MC1 ≥ MG1 > MP1 and MC2 ≥ MG2 > MP2.

2. Tire according to Claim 1, **characterized in that** the thicknesses E_{P1} and E_{G1} and E_{P2} and E_{G2} of the profiled rubber compound elements P1 and G1 and P2 and G2, measured in the radial direction, are such that E_{P1} is between 30 and 60% of (E_{G1} + E_{P1}) and E_{P2} is between 30 and 60% of (E_{G2}+E_{P2}).

3. Tire according to Claim 1 or 2, **characterized in that** the sums of the respective thicknesses of the profiled rubber compound elements P1 and G1 and P2 and G2, measured at the end of the first ply in the radial direction, are respectively between 30% and 80% of the overall rubber compound thickness between generatrices of cords of the first and second plies and third and first plies, respectively.

4. Tire according to one of Claims 1 to 3, **characterized in that** the crown reinforcement comprises at least two working plies covered radially by at least one protective ply, and **in that** the axial width of the radially outermost working ply is less than the width of the said other two plies.

5. Tire according to one of Claims 1 to 4, **characterized in that** the crown reinforcement comprises at least two continuous working plies, and **in that** it is supplemented on each side of the circumferential mid-plane by at least one working half-ply.

6. Tire according to one of Claims 1 to 5, the crown reinforcement comprising at least four plies, **characterized in that**, apart from the said first ply, the axially outer end of at least one other ply radially opposite at least one ply situated radially more outwardly or radially more inwardly is separated radially from the latter ply by a profiled rubber compound element Px, **in that** the said profiled element Px is radially separated from the radially outer liner Cx of the said other ply by a second profiled rubber compound element Gx, and **in that** the said profiled rubber compound elements Px, Gx and the said liner Cx have respective tensile secant moduli of elasticity at 10% elongation MPx, MGx, MCx such that MCx ≥ MGx > MPx.

7. Tire according to Claim 6, **characterized in that** the axially outer end of the said profiled element Px is situated at a distance from the equatorial plane of the tire which is less than the distance separating the said plane from the end of the said latter ply.

8. Tire according to Claim 6 or 7, **characterized in that** the thicknesses E_{Px} and E_{Gx} of the profiled rubber compound elements Px and Gx, measured in the radial direction, are such that E_{Px} is between 30 and 60% of (E_{Gx} + E_{Px}).

9. Tire according to one of the preceding claims, **characterized in that** the profiled rubber compound elements G1, G2, Gx have their axially inner ends situated at distances from the equatorial plane which are respectively at most equal to the distances separating the said plane from the axially inner ends of the profiled rubber compound elements P1, P2, Px.

## Patentansprüche

1. Luftreifen mit radialer Karkassenbewehrung, über der eine Scheitelbewehrung liegt, die mindestens drei Lagen von Verstärkungselementen enthält, die in jeder Lage parallel zueinander sind, wobei mindestens das axial äußere Ende einer ersten Lage radial gegenüber einer zweiten Lage liegt, die sich radial weiter innen befindet, und radial gegenüber einer dritten Lage liegt, die sich radial weiter außen befindet, **dadurch gekennzeichnet, dass** mindestens ein erstes Profilteil P1 aus Kautschukmischung die zweite Lage radial von mindestens dem Ende der ersten Lage trennt, dass das axial äußere Ende des ersten Profilteils P1 sich in einem Abstand zur Äquatorialebene des Luftreifens befindet, der geringer ist als der Abstand, der das Ende der zweiten Lage von der Ebene trennt, dass das Profilteil P1 radial vom radial äußeren Innenliner C1 der ersten Lage durch ein zweites Profilteil G1 aus Kautschukmischung getrennt ist, dass mindestens ein drittes Profilteil P2 aus Kautschukmischung radial die dritte Lage von mindestens dem Ende der ersten Lage trennt, dass das axial äußere Ende des dritten Profilteils P2 sich in einem Abstand zur Äquatorialebene des Luftreifens befindet, der geringer ist als der das Ende der dritte Lage von der Ebene trennende Abstand, dass das Profilteil P2 radial vom radial inneren Innenliner C2 der ersten Lage durch ein viertes Profilteil G2 aus Kautschukmischung getrennt ist, und dass die Profilteile P1, P2 und G1, G2 aus Kautschukmischung und die Innenliner C1, C2 jeweils solche Sekanten-Elastizitätsmodule unter Spannung bei 10 % Dehnung MP1, MP2, MG1, MG2, MC1, MC2 haben, dass gilt MC2 ≥ MG1 > MP1 und MC2 ≥ MG2 > MP2.

2. Luftreifen nach Anspruch 1, **dadurch gekennzeichnet, dass** die Dicken E_{P1} und E_{G1} und E_{P2} und E_{G2} der Profilteile P1 und G1 und P2 und G2 aus Kautschukmischungen, gemessen gemäß der radialen Richtung, derart sind, dass E_{P1} zwischen 30 und 60 % von (E_{G1} + E_{G1}) und E_{P2} zwischen 30 und 60 % von (E_{G2} + E_{P2}) liegt.

3. Luftreifen nach Anspruch 1 oder 2, **dadurch gekennzeichnet, dass** die Summen der Dicken der Profilteile P1 und G1 und P2 und G2 aus Kautschukmischung, gemessen am Ende der ersten Lage in radialer Richtung, je zwischen 30 % und 80 % der globalen Dicke der Kautschukmischung zwischen Mantellinien von Kabeln der ersten und zweiten Lagen bzw. dritten und ersten Lagen liegen.

4. Luftreifen nach einem der Ansprüche 1 bis 3, **dadurch gekennzeichnet, dass** die Scheitelbewehrung mindestens zwei Arbeitslagen enthält, die radial von mindestens einer Schutzlage bedeckt sind, und dass die axiale Breite der radial am weitesten außen liegenden Arbeitslage geringer als die Breite der zwei anderen Lagen ist.

5. Luftreifen nach einem der Ansprüche 1 bis 4, **dadurch gekennzeichnet, dass** die Scheitelbewehrung mindestens zwei durchgehende Arbeitslagen enthält, und dass sie auf jeder Seite der Umfangsmittellinie durch mindestens eine halbe Arbeitslage vervollständigt wird.

6. Luftreifen nach einem der Ansprüche 1 bis 5, wobei die Scheitelbewehrung mindestens vier Lagen enthält, **dadurch gekennzeichnet, dass**, außer der ersten Lage, das axial äußere Ende mindestens einer anderen Lage, die radial gegenüber mindestens einer Lage liegt, die sich radial weiter außen oder radial weiter innen befindet, radial von dieser letzten Lage durch ein Profilteil Px aus Kautschukmischung getrennt ist, dass das Profilteil Px radial vom radial äußeren Innenliner Cx der anderen Lage durch ein zweites Profilteil Gx aus Kautschukmischung getrennt ist, und dass die Profilteile Px, Gx aus Kautschukmischung und der Innenliner Cx solche Sekanten-Elastizitätsmodule unter Spannung bei 10 % Dehnung MPx, MGx, MCx haben, dass gilt MCx ≥ MGx > MPx.

7. Luftreifen nach Anspruch 6, **dadurch gekennzeichnet, dass** das axial äußere Ende des Profilteils Px sich in einem Abstand von der Äquatorialebene des Luftreifens befindet, der geringer ist als der Abstand, der das Ende der letzten Lage von der Ebene trennt.

8. Luftreifen nach Anspruch 6 oder 7, **dadurch gekennzeichnet, dass** die Dicken E_{Px} und E_{Gx} der Profilteile Px und Gx aus Kautschukmischungen, gemessen in radialer Richtung, so sind, dass E_{Px} zwischen 30 und 60 % von (E_{Gx} + E_{Px}) liegt.

9. Luftreifen nach einem der vorhergehenden Ansprüche, **dadurch gekennzeichnet, dass** die axial inneren Enden der Profilteile G1, G2, Gx aus Kautschukmischung sich in Abständen von der Äquatorialebene befinden, die höchstens gleich den Abständen sind, die die axial inneren Enden der Profilteile P1, P2, Px aus Kautschukmischung von der Ebene trennen.
